# FASCICULE DE BREVET EUROPEEN

(11) **EP 0 466 152 B1**
(45) Date de publication et mention de la délivrance du brevet: **30.11.1994**
(21) Numéro de dépôt: 91111559.0
(22) Date de dépôt: 11.07.1991
(51) Int. Cl.: H02J 13/00

(54) **Dispositif de plusieurs émetteurs-récepteurs électriques montés dans un réseau de distribution d'énergie électrique**
Vorrichtung von mehreren Stromsende-Empfängern montiert in einem Stromversorgungsnetz
Multi-power transceiver apparatus mounted in a power distribution network

(30) Priorité: 13.07.1990 FR 9008931
(43) Date de publication de la demande: 15.01.1992
(73) Titulaire: MOULINEX, F-93170 Bagnolet (FR)
(72) Inventeur: Gilbert, Jérôme, Moulinex, F-14123 Cormelles-Le-Royal (FR); Parise, Vital, André, Moulinex, F-14123 Cormelles-Le-Royal (FR)
(74) Mandataire: May, Hans Ulrich, Dr.

(56) Documents cités:
- EP-A- 0 320 390
- EP-A- 0 378 018
- FR-A- 2 612 657
- US-A- 4 667 193

## Description

L'invention se rapporte à un dispositif de commande de plusieurs émetteurs-récepteurs électriques dits esclaves qui comportent chacun un moyen de commande d'appareil d'utilisation et qui sont montés dans un réseau de distribution d'énergie électrique d'une habitation dans lequel on utilise la technique des courants porteurs pour la transmission d'informations entre lesdits esclaves et au moins une régie-maître émetteur-récepteur qui comporte un microcontrôleur de gestion des informations.

L'invention concerne, plus précisément, un dispositif de ce genre qui comporte une mémoire RAM sauvegardée qui contient des programmes utilisateurs et une adresse d'habitation, un clavier relié au microcontrôleur permettant d'agir sur le déroulement du programme d'application, un moyen d'affichage V permettant la visualisation, notamment de l'adresse du récepteur esclave à partir de textes résidant dans la mémoire ROM de la régie-maître, ainsi que des moyens d'attribution d'adresse à chacun desdits esclaves qui comportent chacun également un microcontrôleur comportant une mémoire du type EEPROM ou RAM sauvegardée destinée à contenir une adresse d'habitation et une adresse d'esclave, ainsi qu'une adresse de famille.

Les dispositifs connus de ce genre sont difficiles à gérer notamment au niveau de l'adressage des esclaves qui requiert de l'utilisateur de nombreuses manipulations (réglage de roues codeuses) ainsi qu'une attention particulière afin de ne pas attribuer des adresses identiques à des esclaves différents.

L'invention a notamment pour but de supprimer ces inconvénients.

A cet effet, l'invention prévoit que les moyens d'attribution d'adresses comportent, pour chaque esclave, un programme scrutateur des informations circulant dans le réseau et des moyens d'émission commandés par l'utilisateur et destinés à l'envoi vers le maître d'un message de demande d'attribution d'adresse de l'esclave sur le réseau, et pour la régie-maître, un moyen de validation commandé par l'utilisateur et apte à prélever dans la mémoire RAM l'adresse d'habitation de manière à émettre un message d'acquiescement d'adresse en diffusion générale à tous les esclaves et comportant ladite adresse d'habitation qui permet de délimiter un groupe fermé d'esclaves et l'adresse de l'esclave demandeur, ledit esclave demandeur capturant et stockant ledit message dans sa mémoire.

Ainsi, du fait que l'esclave prend en charge l'interrogation de la régie-maître et que cette dernière valide les adresses d'habitation et d'esclave en les réémettant vers l'esclave, l'utilisateur est déchargé des opérations fastidieuses d'adressage. En outre, ce dispositif permet grâce au message d'acquiescement d'adresse en diffusion générale d'obtenir sur le réseau un groupe fermé d'esclaves non susceptibles d'être récupérés par un réseau similaire voisin.

Selon une autre caractéristique importante de l'invention, le microcontrôleur de la régie-maître comporte dans sa mémoire ROM un programme de sûreté qui, après l'envoi des signaux de mise en fonctionnement de l'appareil d'utilisation, émet un message de fin de session, tandis que chaque esclave comporte un programme d'accusé de réception en réponse aux signaux de mise ne fonctionnement, ainsi qu'un temporisateur dont le compteur est déclenché par les signaux de mise en fonctionnement et qui est apte à déconnecter l'appareil d'utilisation si le message de fin de session n'est pas arrivé avant la fin de comptage du temporisateur.

Ainsi, cette caractéristique rend impossible la mise sous tension durable d'un appareil d'utilisation qui produirait des perturbations telles que toutes transmissions ultérieures de message, en particulier un ordre d'arrêt serait impossible.

Les caractéristiques et avantages de l'invention ressortiront d'ailleurs de la description qui va suivre, à titre d'exemple, en référence au dessin annexé dans lequel :

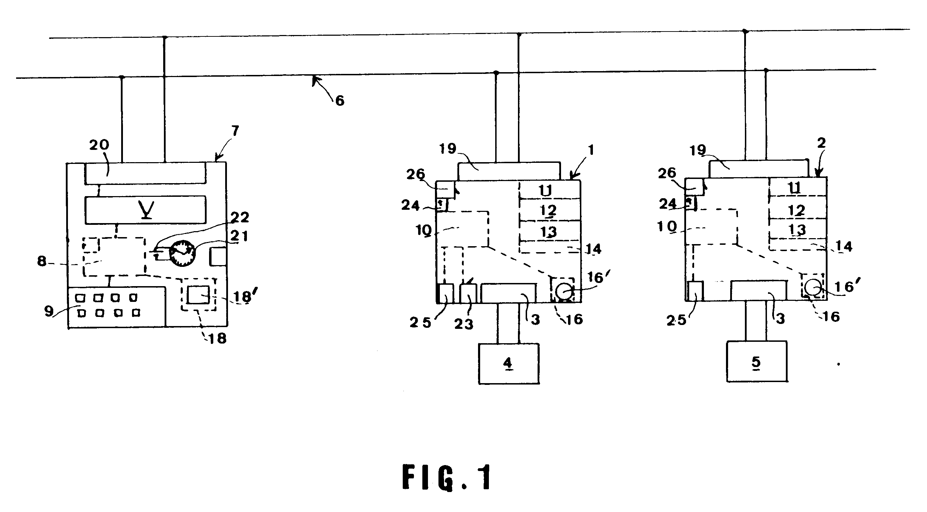

la figure 1 illustre le schéma synoptique d'un exemple de réalisation d'un dispositif de commande selon l'invention.

Le dispositif de commande illustré à la figure 1 est destiné à permettre le dialogue entre plusieurs émetteurs-récepteurs électriques 1,2.. dits esclaves comportant chacun un moyen de commande 3 d'appareil d'utilisation 4,5.. (par exemple, appareils électroménagers, volets électriques, lampes) et montées dans un réseau 6 de distribution d'énergie électrique d'une habitation, et une régie-maître émetteur-récepteur 7 qui comporte un microcontrôleur 8 de gestion des informations, une mémoire RAM sauvegardée qui contient des programmes utilisateurs et une adresse habitation, un clavier 9 relié au microcontrôleur permettant d'agir sur le déroulement du programme d'application, et un moyen d'affichage V permettant la visualisation, notamment de l'adresse du récepteur esclave à partir de textes résidant dans la mémoire ROM de la régie-maître.

La régie-maître 7 présente un boîtier de forme générale parallélépipèdique aplatie dont la face supérieure porte le moyen d'affichage V, le clavier 9 et divers boutons qui seront décrits ultérieurement. Chaque esclave comporte un boîtier comprenant de façon connue en soi, une prise de branchement sur le réseau 6, et une prise femelle destinée à recevoir la prise mâle associée aux appareils d'utilisation. Bien entendu, dans une autre réalisation l'esclave peut être intégré à l'appareil.

Pour échanger les informations entre les esclaves 1, 2... et la régie-maître 7, on utilise la technique bien connue des courants porteurs qui consiste à moduler un signal porteur de haute fréquence compris entre 90 et 150 kilohertz par les informations à transmettre, à l'émettre sur le réseau 6 de distribution qui, en France, possède une tension de 220 volts et une fréquence de 50 hertz, puis à le démoduler de manière à reformer lesdites informations pour leur traitement.

Afin d'assurer la commande appropriée des esclaves associés à différents appareils d'utilisation 4,5.., la régie-maître comporte des moyens d'attribution d'adresse à chacun desdits esclaves qui comportent chacun également un microcontrôleur 10 comportant une mémoire du type EEPROM ou RAM sauvegardée - destinée à contenir une adresse d'habitation 11, une adresse d'esclave 12, ainsi qu'une adresse de famille 13.

Les microcontrôleurs utilisés dans la régie-maître et les différents esclaves sont du type 80C51 fabriqués par exemple par la Société INTEL.

Afin de permettre une meilleure compréhension de certaines expressions utilisées dans la présente demande, on donne ci-après leur définition :
Programme utilisateur - séquences d'actions que l'utilisateur choisit de faire exécuter par le maître et comprenant par exemple un premier pas correspondant au numéro de code de l'appareil d'utilisation ; un deuxième pas correspondant à l'heure de l'action souhaitée en vue de la mise en marche ou l'arrêt de l'appareil d'utilisation, un troisième pas correspondant au jour de l'action, un quatrième pas correspondant à la nature de l'action marche ou arrêt du fonctionnement, un cinquième pas optionnel correspondant à un paramètre pouvant prendre 256 valeurs différentes, par exemple, une température, un pourcentage de la puissance maximale pour une lampe, un pourcentage de l'ouverture maximale pour un volet roulant électrique, un nombre de tasses par cafetière automatique, etc... ;
Programme d'application - programme contenu dans la mémoire ROM du microcontrôleur et qui est destiné à remplir les fonctions attendues de l'appareil d'utilisation ;
Adresse d'habitation - code représentatif d'un groupe fermé d'utilisateurs esclaves commandables par une régie-maître ;
Adresse de famille - adresse donnée par le constructeur lors de la fabrication de l'esclave et représentative de la famille par exemple des radiateurs, des lampes ... ;
Adresse d'esclave - code représentatif de l'identité de l'esclave dans le réseau.

Selon l'invention, afin de rendre automatique l'opération d'adressage des différents esclaves vis à vis de la régie-maître, les moyens d'attribution d'adresse comportent, pour chaque esclave 1,2.., un programme 14 scrutateur des informations circulant dans le réseau et des moyens d'émission 16 commandés par l'utilisateur et destinés à l'envoi vers le maître d'un message de demande d'attribution d'adresse de l'esclave sur le réseau, et pour la régie-maître 7, un moyen de validation 18 commandé par l'utilisateur et apte à prélever dans la mémoire RAM l'adresse d'habitation de manière à émettre un message d'acquiescement d'adresse en diffusion générale à tous les esclaves 1,2.. et comportant ladite adresse d'habitation qui permet de délimiter un groupe fermé d'esclaves et l'adresse de l'esclave demandeur, ledit esclave demandeur capturant et stockant ledit message dans sa mémoire.

Pour permettre l'utilisation commode des esclaves, les moyens d'émission 16 comportent un bouton poussoir 16′ relié électriquement au microcontrôleur de l'esclave et qui, lorsqu'il est sollicité par l'utilisateur, vient occuper un état actif pour lequel, d'une part, il déclenche un programme d'élaboration d'un message de demande d'attribution d'adresses d'habitation et d'esclave contenues dans la mémoire EEPROM de l'esclave après branchement sur le réseau et téléchargement par la régie-maître, et d'autre part, il provoque la transmission dudit message vers la régie-maître au travers d'un modem 19 interne à l'esclave.

Le message de demande d'attribution d'adresse est constitué par une suite de mots transmis selon un mode asynchrone, chaque mot comportant un bit de départ, huit bits d'informations et un bit d'arrêt, et chaque bit modulant la porteuse haute fréquence du modem dont le signal résultant de sortie est émis sur le réseau 6. On peut également prévoir un bit de parité.

La régie-maître 7, comportant également un modem 20 qui reconstitue le message de demande d'attribution d'adresse de l'esclave, comprend dans le microcontrôleur 8 un programme de transformation et de visualisation du message sur le moyen d'affichage V indiquant l'adresse proposée par l'esclave, tandis que le moyen de validation 18 comprend une touche poussoir 18′ qui lorsqu'elle est sollicitée par l'utilisateur vient occuper un état actif en lequel il déclenche le message d'acquiescement d'adresse.

Selon une autre caractéristique de l'invention, la régie-maître 7 comporte une horloge 21 en temps réel permettant d'envoyer dans le réseau des messages comportant des informations relatives à la date, au jour et à l'heure, ainsi qu'une alimentation électrique indépendante 22 destinée à maintenir l'alimentation de l'horloge lors de coupures accidentelles du réseau électrique, lesdits messages étant envoyés soit sur requête d'un des esclaves, soit à l'initiative de la régie-maître.

Ainsi, grâce à cette diffusion générale, la transmission des messages date, jour, heure peut se faire soit à la requête d'un des esclaves lors de sa connexion sur le réseau ou lors du rétablissement du secteur après coupure, soit à l'initiative de la régie-maître, par exemple lors de sa connexion sur le réseau, à heure fixe tous les jours pour le recalage d'horloges moins précises internes à certains esclaves, ou bien après modification de l'heure par l'utilisateur.

Selon encore une autre caractéristique de l'invention, l'un des esclaves (non représenté) comporte en outre un moyen détecteur du signal de changement de tarification émis sur le réseau par le distributeur, et un moyen transmetteur qui émet un message en diffusion générale à tous les esclaves 1,2.., certains esclaves 1 destinés plus particulièrement à la commande d'appareils gros consommateur d'électricité comportant un bouton bistable 23 dit "ECO" relié électriquement au microcontrôleur et susceptible d'occuper, soit une position Marche pour laquelle le microcontrôleur utilise ledit message et déclenche les moyens de commande 3 de l'appareil d'utilisation, 4 qui va fonctionner ainsi au tarif bas du distributeur, soit une position Arrêt pour laquelle le microcontrôleur ne prend pas en compte ledit signal. Ainsi, cet esclave, étant installé par l'utilisateur au niveau du tableau de distribution de l'énergie électrique de l'habitation, détecte le signal de changement de tarification et retransmet le message par exemple à la famille des radiateurs, des machines à laver la vaisselle ou le linge, qui, si le bouton 23 "ECO" est en position MARCHE fonctionneront ainsi au tarif bas.

Afin de prévoir le développement futur de nouvelles fonctions ou familles d'esclaves, le fabricant est amené à ajouter dans la mémoire ROM de chacun de ces esclaves des textes codés en ASCII pouvant être transmis à la régie-maître 7 pour être visualisés sur le moyen d'affichage V de la régie-maître en fonction d'actions effectuées ou niveau du clavier 9 et retransmises à l'esclave, lesdits textes correspondant à de nouvelles fonctions propres à l'esclave non prévues dans la régie-maître 7.

A titre d'exemple, on va ci-après décrire la mise en oeuvre du dispositif de commande selon l'invention.

Au niveau de l'esclave, lors d'un premier branchement, la régie-maître télécharge la mémoire EEPROM de l'esclave avec les adresses d'habitation et d'esclave. L'utilisateur appuie sur le bouton poussoir 16′, ce qui envoie vers la régie-maître 7 un message de demande d'attribution d'adresse. Ce message est visualisé sur le moyen d'affichage V de la régie-maître 7. Dans le cas où l'adresse d'esclave proposée convient, l'utilisateur valide le message en appuyant sur la touche poussoir 18′, dans le cas contraire, l'utilisateur procède au préalable à la modification de l'adresse d'esclave au moyen du clavier 9, puis actionne la touche poussoir 18′. L'actionnement de cette touche poussoir 18′ déclenche l'émission du message d'acquiescement d'adresse. L'esclave demandeur reçoit ce message et stocke ainsi dans sa mémoire l'adresse d'habitation et son adresse d'esclave. De manière à permettre l'utilisation d'un tel dispositif de commande dans différents pays, l'invention prévoit également que la régie-maître 7 comporte dans sa mémoire ROM, des textes visualisables en plusieurs langues, ainsi qu'un moyen de sélection de la langue par l'utilisateur, tandis que chaque esclave 1,2.. comporte dans sa mémoire EEPROM un code attribué à la langue sélectionnée par l'utilisateur.

La procédure d'attribution d'adresse étant terminée, l'utilisateur peut procéder à la phase de programmation selon deux modes : une premier mode "différé" qui attribue à la régie-maître 7 un rôle d'aide par le déroulement d'un menu visualisable permettant de choisir l'esclave que l'on veut programmer (heure - état marche - arrêt - etc...) puis validation ; un second mode "immédiat" qui demande à l'utilisateur de taper directement sur le clavier 9 le numéro de l'adresse de l'esclave, puis d'appuyer sur des touches marche ou arrêt dudit clavier.

Ces opérations étant terminées, la régie-maître 7 gère le fonctionnement du groupe fermé d'esclaves qui lui sont reliés. De manière à éviter de mauvais fonctionnements des appareils d'utilisation 4, 5.. suite à des perturbations du réseau, le microcontrôleur 8 de la régie-maître comporte dans sa mémoire ROM un programme de sûreté qui, après l'envoi des signaux de mise en fonctionnement de l'appareil d'utilisation 4, 5.., émet un message de fin de session, tandis que chaque esclave 1, 2.. comporte un programme d'accusé de réception en réponse aux signaux de mise ne fonctionnement, ainsi qu'un temporisateur 24 dont le compteur est déclenché par les signaux de mise en fonctionnement et qui est apte à déconnecter l'appareil d'utilisation 4, 5.. si le message de fin de session n'est pas arrivé avant la fin de comptage du temporisateur.

Ainsi, cette procédure rend impossible la mise sous tension durable d'un appareil d'utilisation qui produirait des perturbations telles que toutes transmissions ultérieures de message, en particulier un ordre d'arrêt serait impossible.

Il convient d'ajouter que, dans le cas où, l'utilisateur souhaite commander directement le fonctionnement d'un appareil d'utilisation, le dispositif de commande soit mis "en veille". Pour cela, chaque esclave 1,2.. comporte en outre un bouton poussoir 25 relié électriquement au microcontrôleur 10 et qui permet de commander localement l'état de fonctionnement, marche ou arrêt, de l'appareil d'utilisation 4,5.. qui lui est associé, ainsi qu'un interrupteur bistable 26 relié électriquement au microcontrôleur 10 et destiné à isoler l'esclave vis à vis d'un message d'arrêt général envoyé par la régie-maître 7.

## Revendications

1. Dispositif de commande de plusieurs émetteurs-récepteurs électriques (1,2..) dits esclaves qui comportent chacun un moyen de commande (3) d'appareil d'utilisation (4,5..) et qui sont montés dans un réseau (6) de distribution d'énergie électrique d'une habitation dans lequel on utilise la technique des courants porteurs pour la transmission d'informations entre lesdits esclaves et au moins une régie-maître émetteur-récepteur (7) qui comporte un microcontrôleur (8) de gestion des informations, une mémoire RAM sauvegardée qui contient des programmes utilisateurs et une adresse d'habitation, un clavier (9) relié au microcontrôleur permettant d'agir sur le déroulement du programme d'application, un moyen d'affichage V permettant la visualisation, notamment de l'adresse du récepteur esclave à partir de textes résidant dans la mémoire ROM de la régie-maître, ledit dispositif comportant des moyens d'attribution d'adresse à chacun desdits esclaves qui comportent chacun également un microcontrôleur (10) comportant une mémoire du type EEPROM ou RAM sauvegardée destinée à contenir une adresse d'habitation (11) et une adresse d'esclave (12), ainsi qu'une adresse de famille (13),
**caractérisé en ce que** les moyens d'attribution d'adresses comportent, pour chaque esclave (1,2..), un programme (14) scrutateur des informations circulant dans le réseau et des moyens d'émission (16-16′) commandés par l'utilisateur et destinés à l'envoi vers le maître d'un message de demande d'attribution d'adresses d'habitation et d'esclave contenues dans la mémoire EEPROM de l'esclave après branchement sur le réseau, et pour la régie-maître (7), un moyen de validation (18,18') commandé par l'utilisateur et apte à prélever dans la mémoire RAM l'adresse d'habitation de manière à émettre un message d'acquiescement d'adresse en diffusion générale à tous les esclaves (1,2..) et comportant ladite adresse d'habitation qui permet de délimiter un groupe fermé d'esclaves et l'adresse de l'esclave demandeur, ledit esclave demandeur capturant et stockant ledit message dans sa mémoire.

2. Dispositif de commande selon la revendication 1,
**caractérisé en ce que** les moyens d'émission (16) comportent un bouton poussoir (16′) relié électriquement au microcontrôleur (10) de l'esclave et qui, lorsqu'il est sollicité par l'utilisateur, vient occuper un état actif pour lequel, d'une part, il déclenche un programme d'élaboration d'un message de demande d'attribution d'adresses d'esclave, et d'autre part, il provoque la transmission dudit message vers la régie-maître au travers d'un modem (19) interne à l'esclave.

3. Dispositif de commande selon la revendication 2,
**caractérisé en ce que** le message de demande d'attribution d'adresse est constitué par une suite de mots transmis selon un mode asynchrone, chaque mot comportant un bit de départ, huit bits d'informations et un bit d'arrêt, et chaque bit modulant la porteuse haute fréquence du modem dont le signal résultant de sortie est émis sur le réseau (6).

4. Dispositif de commande selon les revendications 2 ou 3,
**caractérisé en ce que** la régie-maître (7), comportant également un modem (20) qui reconstitue le message de demande d'attribution d'adresse de l'esclave, comprend dans le microcontrôleur un programme de transformation et de visualisation du message sur le moyen d'affichage (V) indiquant l'adresse proposée par l'esclave, tandis que le moyen de validation (18) comprend une touche poussoir 18' qui lorsqu'elle est sollicitée par l'utilisateur vient occuper un état actif en lequel il déclenche le message d'acquiescement d'adresse.

5. Dispositif de commande selon l'une quelconque des revendications précédentes,
**caractérisé en ce que** la régie-maître (7) comporte une horloge (21) en temps réel permettant d'envoyer dans le réseau des messages comportant des informations relatives à la date, au jour et à l'heure, ainsi qu'une alimentation électrique indépendante (22) destinée à maintenir l'alimentation de l'horloge lors de coupures accidentelles du réseau électrique, lesdits messages étant envoyés soit sur requête d'un des esclaves, soit à l'initiative de la régie-maître.

6. Dispositif de commande selon l'une quelconque des revendications précédentes,
**caractérisé en ce que** l'un des esclaves comporte en outre un moyen détecteur du signal de changement de tarification émis sur le réseau par le distributeur, et un moyen transmetteur qui émet un message en diffusion générale à tous les esclaves, certains esclaves destinés plus particulièrement à la commande d'appareils gros consommateurs d'électricité comportant un bouton bistable (23) dit "ECO" relié électriquement au microcontrôleur et susceptible d'occuper, soit une position Marche pour laquelle le microcontrôleur utilise ledit message et déclenche les moyens de commande (3) de l'appareil d'utilisation, (4, 5..) qui va fonctionner ainsi au tarif bas du distributeur, soit une position Arrêt pour laquelle le microcontrôleur ne prend pas en compte ledit signal.

7. Dispositif de commande selon l'une quelconque des revendications précédentes,
**caractérisé en ce que** le microcontrôleur (8) de la régie-maître comporte dans sa mémoire ROM un programme de sûreté qui, après l'envoi des signaux de mise en fonctionnement de l'appareil d'utilisation (4, 5..), émet un message de fin de session, tandis que chaque esclave (1, 2..) comporte un programme d'accusé de réception en réponse aux signaux de mise ne fonctionnement, ainsi qu'un temporisateur (24) dont le compteur est déclenché par les signaux de mise en fonctionnement et qui est apte à déconnecter l'appareil d'utilisation (4, 5..) si le message de fin de session n'est pas arrivé avant la fin de comptage du temporisateur.

8. Dispositif de commande selon l'une quelconque des revendications précédentes,
**caractérisé en ce que** certains esclaves comportent dans leur mémoire ROM, des textes codés en ASCII pouvant être transmis à la régie-maître (7) pour être visualisés sur le moyen d'affichage V de la régie-maître en fonction d'actions effectuées ou niveau du clavier (9) et retransmises à l'esclave, lesdits textes correspondant à de nouvelles fonctions propres à l'esclave non prévues dans la régie-maître.

9. Dispositif de commande selon l'une quelconque des revendications précédentes,
**caractérisé en ce que** la régie-maître (7) comporte dans sa mémoire ROM, des textes visualisables en plusieurs langues, ainsi qu'un moyen de sélection de la langue par l'utilisateur, tandis que chaque esclave (1,2..) comporte dans sa mémoire EEPROM un code attribué à la langue sélectionnée par l'utilisateur.

10. Dispositif de commande selon l'une quelconque des revendications précédentes,
**caractérisé en ce que** chaque esclave (1,2..) comporte en outre un bouton poussoir (25) relié électriquement au microcontrôleur (10) et qui permet de commander localement l'état de fonctionnement, marche ou arrêt, de l'appareil d'utilisation (4,5..) qui lui est associé, ainsi qu'un interrupteur bistable (26) relié électriquement au microcontrôleur (10) et destiné à isoler l'esclave vis à vis d'un message d'arrêt général envoyé par la régie-maître (7).

## Patentansprüche

1. Vorrichtung zur Steuerung mehrerer elektrischer Sende-Empfänger, sogenannter Slaves (1, 2 ...), die jeweils ein Steuermittel (3) für eine Benutzervorrichtung (4, 5 ...) aufweisen und in einem elektrischen Stromversorgungsnetz (6) einer Wohnung montiert sind, bei der die Technik der Trägerströme für die Übertragung von Informationen zwischen den Slaves und wenigstens einer Sende-Empfänger-Kontrolleinheit (7) verwendet wird, die einen Mikrosteuerbaustein (8) zur Verwaltung von Informationen und einen gesicherten RAM-Speicher aufweist, der Benutzerprogramme und eine Wohnungsadresse enthält, eine Tastatur (9), die mit dem Mikrosteuerbaustein verbunden ist und es ermöglicht, auf den Ablauf des Anwendungsprogramms einzuwirken, eine Anzeigeeinrichtung V, die die Visualisierung insbesondere der Adresse des Slave-Empfängers ausgehend von Texten ermöglicht, die in dem ROM-Speicher der Master-Kontrolleinheit resident sind, wobei die Vorrichtung Mittel zur Adressenzuteilung an jeden der Slaves aufweist, die jeweils ebenfalls einen Mikrosteuerbaustein (10) mit einem Speicher des Typs EEPROM oder gesicherter RAM aufweisen, der dazu bestimmt ist, eine Wohnungsadresse (11) und eine Slave-Adresse (12) sowie eine Familienadresse (13) zu enthalten,
**dadurch gekennzeichnet, daß** die Mittel zur Adressenzuteilung für jeden Slave (1, 2 ...) ein Suchprogramm (14) für die in dem Netz umlaufenden Informationen sowie Sendemittel (16-16′) aufweisen, die vom Benutzer gesteuert und dazu bestimmt sind, zu dem Master eine Anforderungsnachricht für Wohungs- und Slave-Adressen zu schicken, die in dem EEPROM-Speicher des Slaves nach dem Anschluß an das Netz enthalten sind, sowie für die Master-Kontrolleinheit (7) ein Validierungsmittel (18, 18′), das vom Benutzer gesteuert wird und geeignet ist, aus dem RAM-Speicher die Wohnungsadresse so zu entnehmen, daß eine Adressenzustimmungsnachricht im Rundruf an alle Slaves (1, 2 ...) ausgesendet wird, und die Wohnungsadresse aufweist, womit es möglich wird, eine geschlossene Gruppe von Slaves und die Adresse des anfordernden Slaves abzugrenzen, wobei der anfordernde Slave die Nachricht erfaßt und in seinem Speicher speichert.

2. Steuervorrichtung nach Anspruch 1,
**dadurch gekennzeichnet, daß** die Sendemittel (16) einen Tastknopf (16′) aufweisen, der elektrisch mit dem Mikrosteuerbaustein (10) des Slave verbunden ist und dann, wenn er vom Benutzer gedrückt wird, einen aktiven Zustand einnimmt, in dem er einerseits ein Programm zur Erstellung einer Nachricht zur Slave-Adressenzuteilungsanforderung auslöst, und andererseits die Übertragung der Nachricht über ein internes Modem (19) des Slave zu der Master-Kontrolleinheit hervorruft.

3. Steuervorrichtung nach Anspruch 2,
**dadurch gekennzeichnet, daß** die Adressenzuteilungs-Anforderungsnachricht aus einer Folge von Wörtern gebildet ist, die nach einem asynchronen Modus übertragen werden, wobei jedes Wort ein Startbit, acht Informationsbits und ein Stoppbit aufweist, und wobei jedes Bit die Hochfrequenzträgerwelle des Modems moduliert, dessen resultierendes Ausgangssignal auf dem Netz (6) ausgesendet wird.

4. Steuervorrichtung nach Anspruch 2 oder 3,
**dadurch gekennzeichnet, daß** die Master-Kontrolleinheit (7) auch ein Modem (20) aufeist, das die Adressenzuteilungs-Anforderungsnachricht für den Slave wiederherstellt und in dem Mikrosteuerbaustein (8) ein Programm zur Umformung und Visualisierung der Nachricht auf dem Anzeigemittel (V) aufweist, das die von dem Slave vorgeschlagene Adresse angibt, während das Validierungsmittel (18) eine Drucktaste (18′) aufweist, die beim Drücken durch den Benutzer einen aktiven Zustand einnimmt, in dem sie die Adressenzustimmungsnachricht auslöst.

5. Steuervorrichtung nach einem der vorhergehenden Ansprüche,
**dadurch gekennzeichnet, daß** die Master-Kontrolleinheit (7) eine Echtzeit-Uhr (21) aufweist, die es ermöglicht, in das Netz Nachrichten zu schicken, die Informationen bezüglich des Datums, des Tags und der Stunde enthalten, sowie eine unabhängige elektrische Versorgung (22), die dazu bestimmt ist, die Versorgung der Uhr bei unvorhergesehenen Unterbrechungen des elektrischen Netzes aufrechtzuerhalten, wobei die Nachrichten entweder auf Anforderung eines der Slaves oder auf Initiative der Master-Kontrolleinheit geschickt werden.

6. Steuervorrichtung nach einem der vorhergehenden Ansprüche,
**dadurch gekennzeichnet, daß** einer der Slaves ferner ein Mittel zum Erfassen des Signals der Änderung der Tariffestsetzung, das von dem Verteiler auf dem Netz ausgesendet wird, sowie ein Übertragungsmittel aufweist, das eine Nachricht im Rundruf an alle Slaves aussendet, wobei bestimmte Slaves insbesondere für die Steuerung von Vorrichtungen für Stromgroßverbraucher mit einem bistabilen Knopf (23) bestimmt sind, der "ECO" heißt, elektrisch mit dem Mikrosteuerbaustein verbunden ist und entweder eine Ein-Position, bei der der Mikrosteuerbaustein die Nachricht verwendet und die Steuermittel (3) der Benutzervorrichtung (4, 5 ...) auslöst, die damit auf dem niedrigen Tarif des Verteilers funktioniert, oder eine Aus-Position einnehmen kann, bei der der Mikrosteuerbaustein das Signal nicht berücksichtigt.

7. Steuervorrichtung nach einem der vorhergehenden Ansprüche,
**dadurch gekennzeichnet, daß** der Mikrosteuerbaustein (8) der Master-Kontrolleinheit in seinem ROM-Speicher ein Sicherheitsprogramm aufweist, das nach dem Senden der Signale zur Inbetriebnahme der Benutzervorrichtung (4, 5 ...) eine Sitzungsendenachricht aussendet, während jeder Slave (1, 2 ...) ein Programm zur Empfangsbestätigung in Reaktion auf die Signale zur Inbetriebnahme sowie eine Verzögerungseinrichtung (24) aufweist, deren Zähler durch die Signale zur Inbetriebnahme ausgelöst wird und die in der Lage ist, die Benutzervorrichtung (4, 5 ...) zu trennen, wenn die Sitzungsendenachricht nicht vor dem Zählende der Verzögerungseinrichtung eingetroffen ist.

8. Steuervorrichtung nach einem der vorhergehenden Ansprüche,
**dadurch gekennzeichnet, daß** bestimmte Slaves in ihrem ROM-Speicher ASCII-codierte Texte aufweisen, die zur Master-Kontrolleinheit (7) übertragen werden können, um auf dem Anzeigemittel V der Master-Kontrolleinheit in Abhängigkeit von den auf Höhe der Tastatur (9) durchgeführten Aktionen visualisiert und zu dem Slave zurückübertragen werden können, wobei die Texte neuen, dem Slave eigenen Funktionen entsprechen, die in der Master-Kontrolleinheit nicht vorgesehen sind.

9. Steuervorrichtung nach einem der vorhergehenden Ansprüche,
**dadurch gekennzeichnet, daß** die Master-Kontrolleinheit (7) in ihrem ROM-Speicher in mehreren Sprachen zu visualisierende Texte sowie ein Mittel zur Auswahl der Sprachen durch den Benutzer aufweist, während jeder Slave (1, 2 ...) in seinem EEPROM-Speicher einen Code aufweist, der der von dem Benutzer ausgewählten Sprache zugeteilt ist.

10. Steuervorrichtung nach einem der vorhergehenden Ansprüche,
**dadurch gekennzeichnet, daß** jeder Slave (1, 2 ...) ferner einen Tastknopf (25), der elektrisch mit dem Mikrosteuerbaustein (10) verbunden ist und es ermöglicht, den Betriebszustand (Ein oder Aus) der Benutzervorrichtung (4, 5 ...) lokal zu steuern, die ihr zugeordnet ist, sowie einen bistabilen Schalter (26) aufweist, der elektrisch mit dem Mikrosteuerbaustein (10) verbunden und dafür bestimmt ist, den Slave gegenüber einer von der Master-Kontrolleinheit (7) geschickten, allgemeinen Stoppnachricht zu isolieren.

## Claims

1. Control device for several electrical transmitter-receivers (1, 2..) known as slaves, each of which has a means (3) of controlling user apparatus (4, 5..) and which are mounted in an electrical power distribution system (6) in a dwelling, in which the technique of carrier currents is used for the transmission of data between the said slaves and at least one transmitter-receiver master control (7) which includes a data management microcontroller (8), a safeguarded RAM which contains user programs and a dwelling address, a keyboard (9) connected to the microcontroller for acting on the running of the application program, a display means V for displaying, notably, the address of the slave receiver from texts resident in the ROM of the master control, the said device including means for allocating an address to each of the said slaves, which each also include a microcontroller (10) having a memory of the safeguarded EEPROM or RAM type designed to contain a dwelling address (11) and a slave address (12), as well as a class address (13), characterised in that the address allocation means include, for each slave (1, 2..), a program (14) for scanning the data circulating in the system and transmission means (16-16′) controlled by the user and intended to send, to the master, a message requesting the allocation of dwelling and slave addresses contained in the EEPROM of the slave after connection to the system, and for the master control (7), a validation means (18, 18′) controlled by the user and able to take the dwelling address from the RAM so as to transmit an address acceptance message for general distribution to all the slaves (1, 2..) and including the said dwelling address, which makes it possible to define a closed group of slaves, and the address of the requesting slave, the said requesting slave capturing and storing the said message in its memory.

2. Control device according to Claim 1, characterised in that the transmission means (16) include a push-button (16′) connected electrically to the microcontroller (10) of the slave and which, when it is pressed by the user, comes to occupy an active state in which it, on the one hand, triggers a program for processing a slave address allocation request message, and on the other hand causes the said message to be transmitted to the master control through a modem (19) internal to the slave.

3. Control device according to Claim 2, characterised in that the address allocation request message consists of a series of words transmitted in an asynchronous mode, each word including one start bit, eight data bits and one stop bit, and each bit modulating the high-frequency carrier of the modem, the resulting output signal of which is transmitted over the system (6).

4. Control device according to Claim 2 or 3, characterised in that the master control (7), also including a modem (20) which reconstitutes the slave address allocation request message, comprises, in the microcontroller, a program for transforming and displaying the message on the display means V indicating the address proposed by the slave, whilst the validation means (18) comprises a press-key (18′) which, when it is pressed by the user, comes to occupy an active state in which it triggers the address acceptance message.

5. Control device according to any one of the preceding claims, characterised in that the master control (7) includes a real-time clock (21) enabling messages including data relating to the date, day and time to be sent over the system, and an independent power supply (22) designed to maintain the power supply to the clock during accidental interruptions of the mains supply, the said messages being sent either at the request of one of the slaves or on the initiative of the master control.

6. Control device according to any one of the preceding claims, characterised in that one of the slaves also has a means for detecting the tariff-change signal transmitted over the system by the distributor, and a transmitting means which transmits a message for general distribution to all the slaves, certain slaves, intended more particularly for controlling apparatus consuming a large amount of electricity, having a bistable switch (23), referred to as "ECO", connected electrically to the microcontroller and able to occupy either an On position, in which the microcontroller uses the said message and triggers the control means (3) for the user apparatus (4, 5), which will thus function at the low tariff of the distributor, or an Off position in which the microcontroller does not take the said signal into account.

7. Control device according to any one of the preceding claims, characterised in that the microcontroller (8) of the master control has in its ROM a safety program which, after the signals for start-up of the user apparatus (4, 5..) have been sent, transmits a logging-off message, whilst each slave (1, 2..) has a program for acknowledgement in response to the start-up signals, as well as a delay device (24), the counter of which is triggered by the start-up signals and which is able to disconnect the user apparatus (4, 5..), if the logging-off message has not arrived before the end of counting by the delay device.

8. Control device according to any one of the preceding claims, characterised in that some slaves have, in their ROM, ASCII-coded texts which can be transmitted to the master control (7) so as to be displayed on the display means V of the master control in accordance with actions carried out at the keyboard (9) and retransmitted to the slave, the said texts corresponding to new functions specific to the slave and not provided for in the master control (7).

9. Control device according to any one of the preceding claims, characterised in that the master control (7) has, in its ROM, texts which can be displayed in several languages, as well as a means for the language to be selected by the user, whilst each slave (1, 2..) has, in its EEPROM, a code allocated to the language selected by the user.

10. Control device according to any one of the preceding claims, characterised in that each slave (1, 2..) has, in addition, a push-button (25) connected electrically to the microcontroller (10) and which makes it possible to control locally the state of functioning, on or off, of the user apparatus (4, 5..) which is associated with it, as well as a bistable switch (26) connected electrically to the microcontroller (10) and designed to isolate the slave vis-à-vis a general stop message sent by the master control (7).
